# EUROPEAN PATENT APPLICATION

(11) **EP 1 916 601 A2**
(43) Date of publication of application: **30.04.2008**
(21) Application number: 07253516.4
(22) Date of filing: 05.09.2007
(51) Int. Cl.: G06F 9/50, G06F 11/32

(54) **Multiprocessor system**

(30) Priority: 27.09.2006 JP 2006263303
(71) Applicant: Kabushiki Kaisha Toshiba, Minato-ku, Tokyo 105-8001 (JP)
(72) Inventor: Matsuzaki, Hidenori, c/o Intellectual Property Division, Toshiba Corporation, Minato-ku Tokyo (JP); Asano, Shigehiro, c/o Intellectual Property Division, Kabushiki Kaisha Toshiba, Minato-ku Tokyo 105-8001 (JP); Shono, Atsushi, c/o Intellectual Property Division, Kabushiki Kaisha Toshiba, Minato-ku Tokyo (JP)
(74) Representative: Maury, Richard Philip

(57) **Abstract**

A multiprocessor system includes a processor unit including a core A including a first processing mechanism for improving processing performance of data processing and a PM unit for collecting usage information of hardware resources being used or used in data processing and a core B having a second processing mechanism adopting the same processing system as the first processing mechanism and being inferior in processing performance to the first processing mechanism; and a scheduler for supplying a task not previously executed to the core A and a task to be re-executed to one of processor cores (A and B) to process the task, selected out of the processor unit by referencing the usage information of the hardware resources of the task previously collected in the PM unit at the execution time of application software including a plurality of tasks containing the same task.

## Description

### RELATED APPLICATION(S)

The present disclosure relates to the subject matter contained in Japanese Patent Application No. 2006-263303 filed on September 27, 2006, which is incorporated herein by reference in its entirety.

### FIELD

The present invention relates to a heterogeneous multiprocessor system and to a multiprocessor system for assigning a task to a plurality of processor cores.

### BACKGROUND

Conventionally, in order to speed up a processor, various mechanisms, such as a cache mechanism, a branch prediction mechanism, a superscalar mechanism, an out-of-order mechanism, and an SIMD mechanism, have been proposed. By adopting these mechanisms, the parallel degree at the instruction level is improved, penalty caused by various stalls is avoided, and data level parallelism is effectively used, to thereby improve the processing capability of the processor. The above listed mechanisms contribute to improvement in the processing capability of the processor, but may require large packaging area and power consumption as a tradeoff to the improvement. Whether or not the mechanisms contribute to speed up the processor depends on software and there can also be a possibility that improvement in processing speed cannot be provided at all in some cases.

A multiprocessor system wherein a plurality of processors as mentioned above are operated in parallel is proposed as means for improving the system computation capability. And in recent years, a multicore processor system with a plurality of processor cores installed in one chip has also been implemented owing to miniaturization of a process. The multicore processor system executes a plurality of tasks of independent processing units of software in parallel in one chip.

Further, a multicore processor including different types of processor cores exists and is called a heterogeneous multicore processor. The processor cores provided in the heterogeneous multicore processor include a plurality of types of cores such as a general-purpose processor core, a DSP core, and a dedicated hardware processing engine. For example, a multicore processor including two different general-purpose processor cores, such as a CELL processor, is also called a heterogeneous multicore processor.

In the heterogeneous multicore processor, different types of processor cores are provided and the processor core most optimized for processing for each task is used for realizing efficient processing. For example, the CELL processor has a multicore configuration including eight processor cores (SPE) optimized for media processing and one processor core (PPE) optimized for processing of a general processing such as executing processes related to an operating system (OS).

The detail of the CELL processor is described in the following Related-art document.

Related-art document: "10.2 The Design and Implementation of a First-Generation CELL Processor" D. Pham et al., 2005 IEEE International Solid-State Circuits Conference (ISSCC)

In the multicore processor of the heterogeneous configuration, task assignment as to which task is executed by which processor is important. In the heterogeneous multicore processor in the related art, which task should be executed in which processor is previously determined statistically by a software developer or a tool.

However, optimum static analysis cannot necessarily be conducted as for selection as to "which processor core should be assigned a task if two types of processor cores different only in cache capacity exist" or "which processor core should be assigned a task if a processor core having an out-of-order mechanism and a processor core having no out-of-order mechanism exist". This means that there is a possibility that an optimum solution may be unable to be obtained in static task assignment depending on the types of processor cores provided in the multicore processor.

As the number of processor cores that can be installed in one chip increases owing to miniaturization of a process, and as a larger number of types of cores is provided in the multicore processor, it becomes further difficult to assign tasks statistically.

### SUMMARY

It is therefore one of objects of the present invention to provide a multiprocessor system for dynamically and efficiently assigning a task to a processor core in a heterogeneous multicore processor.

According to a first aspect of the invention, there is provided a multiprocessor system including: a multiprocessor core that includes: a first processor core that is provided with: a first processing mechanism for improving processing performance of data processing in the first processor core; and a performance monitor for collecting usage information of hardware resources being used or used in the data processing; and a second processor core that is provided with a second processing mechanism adopting the same processing system as the first processing mechanism and being inferior in improvement performance to the first processing mechanism; and a scheduler that, when executing application software including a plurality of tasks including tasks that are identical with one another, operates to: determine whether or not a task to be executed is previously executed; supply the task to the first processor core, when determined that the task is not previously executed; select, when determined that the task is previously executed, one from among the processor cores by referring to the usage information collected when the task is previously executed; and supply the task to the selected processor core.

According to a second aspect of the invention, there is provided a multiprocessor system including: a multiprocessor core that includes: a first processor core that is provided with: a plurality of first processing mechanisms for improving processing performance of data processing in the first processor core, the first processing mechanisms being different from one another; and a performance monitor for collecting usage information of hardware resources being used or used in the data processing; and a second processor core that is configured to have processing performance that is less than the processing performance provided by all of the processing mechanisms provided in the first processor core, the second processor being provided with at least one of second processing mechanisms, each of which having improvement performance equal to or less than the respective first processing mechanisms provided in the first processor core; and a scheduler that, when executing application software including a plurality of tasks including tasks that are identical with one another, operates to: determine whether or not a task to be executed is previously executed; supply the task to the first processor core, when determined that the task is not previously executed; select, when determined that the task is previously executed, one from among the processor cores by referring to the usage information collected when the task is previously executed; and supply the task to the selected processor core.

According to a third aspect of the invention, there is provided a multiprocessor system including: a multiprocessor core that includes: a first processor core that is provided with: first and second processing mechanisms for improving processing performance of data processing, the first and second processing mechanisms being different from one another; and a first performance monitor for collecting usage information of hardware resources being used or used in the data processing; a second processor core that is provided with: third and fourth processing mechanisms for improving processing performance of data processing, the third and fourth processing mechanisms being different from one another and from the first and second processing mechanisms; and a second performance monitor for collecting usage information of hardware resources being used or used in the data processing; and a third processor core that is provided with the first and the third processing mechanisms; and a scheduler that, when executing application software including a plurality of tasks including tasks that are identical with one another, operates to: determine whether or not a task to be executed is previously executed; supply the task to one of the first processor core and the second processor core, when determined that the task is not previously executed; select, when determined that the task is previously executed, one from among the processor cores by referring to the usage information collected when the task is previously executed; and supply the task to the selected processor core.

### BRIEF DESCRIPTION OF THE DRAWINGS

In the accompanying drawings:
FIG. 1 is a block diagram to show the general configuration of a system according to an embodiment of the present invention;
FIG. 2 is a block diagram to show the general configuration of a processor unit;
FIG. 3 is a flowchart to show the schematic operation of the whole of the processor unit;
FIG. 4 is a drawing to show an example of processing mechanisms included in cores;
FIG. 5 is a drawing to show an example of PM information;
FIG. 6 is a functional block diagram of a scheduler assisting section;
FIG. 7 is a drawing to show an example of a task queue in one state;
FIG. 8 is a diagram to show task state transition;
FIG. 9 is a drawing to show an example of a core management table in one state;
FIG. 10 is a drawing to show an example of a core information table in one state;
FIG. 11 is a drawing to show an example of a task information table in one state;
FIG. 12 is a flowchart to show an update flow of the task information table;
FIG. 13 is a drawing to show an example of a threshold value table;
FIG. 14 is a drawing to show an example of the comparison result with each threshold value;
FIG. 15 is a drawing to show an example of the score calculation result;
FIG. 16 is a functional block diagram of a task management section;
FIG. 17 is a flowchart to show a schematic flow of the operation of the task management section;
FIG. 18 is a flowchart to show a flow of the detailed operation of a task assignment determination section;
FIG. 19 is a drawing to show an example of a core type by core type assignment enable/disable table;
FIG. 20 is a drawing to show an example of an assignment candidate TID table;
FIG. 21 is a drawing to show an example of a task by task score table reflecting the core state;
FIG. 22 is a drawing to show an example of an executable task core table;
FIG. 23 is a drawing to show an example of processing mechanisms included in cores;
FIG. 24 is a functional block diagram of a scheduler assisting section;
FIG. 25 is a drawing to show an example of a task information table;
FIG. 26 is a flowchart to show an update flow of the task information table; and
FIG. 27 is a drawing to show an example of a task by task score table reflecting the core state.

### DETAILED DESCRIPTION OF THE EMBODIMENTS

Referring now to the accompanying drawings, an embodiment of the present invention will be described in detail.

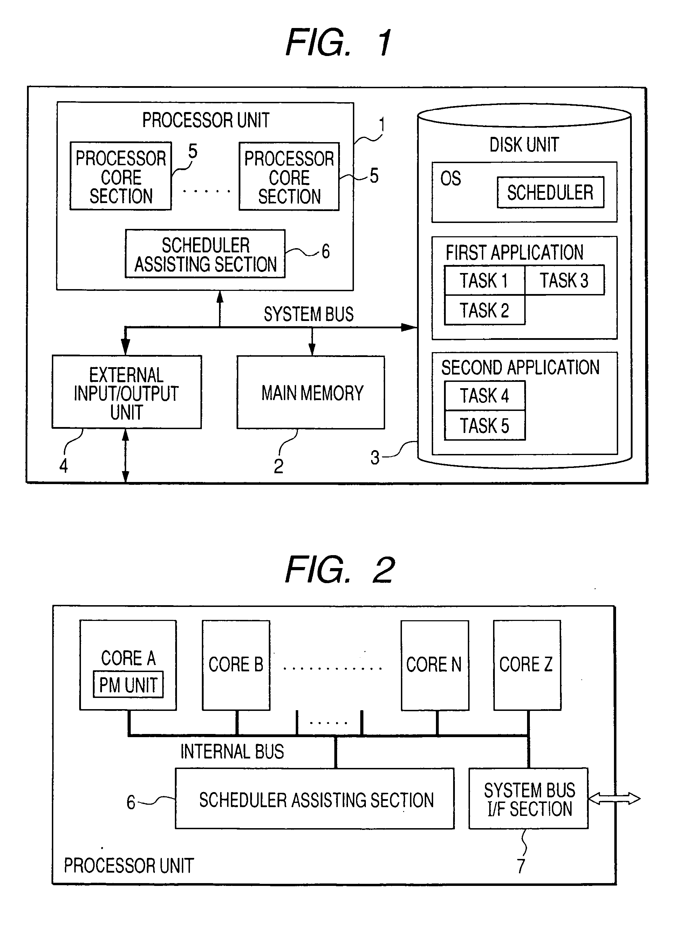

FIG. 1 shows a general configuration of a system according to an embodiment of the present invention. The system includes a processor unit 1, main memory 2, a disk unit 3, and an external input/output unit 4, and each of the components is connected via a system bus. The processor unit 1 includes a plurality of processor cores 5 and a scheduler assisting section 6 (the processor unit 1 is described later in detail). The external input/output unit 4 is connected to input and output devices such as a keyboard, a mouse, and a display (not shown).

The disk unit 3 stores various types of software to be executed in the system, including an operating system (OS) and application programs (first application and second application).

Each of the application programs includes one or more tasks of fine-granularity execution units. For example, FIG. 1 illustrates that the first application includes three tasks of tasks 1, 2, and 3 and the second application includes two tasks of tasks 4 and 5. Execution of the application program is realized by executing the tasks included in the application program as required. For example, in execution of the first application, not only each task is executed, but also the same task is executed more than once or the tasks may be executed at the same time in some cases. In the embodiment, it is assumed that each task is an execution unit called thread. However, the task may be a software unit assigned to the processor core section 5 by scheduling; for example, a software unit such as a process, is also included.

The OS is executed in one of the processor cores 5, whereby the whole system is managed. The OS also includes a scheduler for scheduling tasks in cooperation with the scheduler assisting section 6.

When a user instructs the OS to execute one application program through the external input/output unit 4, the scheduler of the OS notifies the scheduler assisting section 6 as required of the task to be executed from the tasks included in the application program and assigns the task to the processor core section 5 that can execute the task and the processor core section 5 processes the assigned task, thereby proceeding execution of the application program. If an instruction for executing a different application program is given during execution of that application program, the scheduler adds the tasks included in the different application program as the tasks to be scheduled as required, so that a plurality of programs are executed in parallel.

FIG. 2 shows the general configuration of the processor unit 1.

Here, the processor unit 1 is a multiprocessor including N+1 processor cores 5 (cores A-N, and core Z), which are connected to each other via an internal bus.

The core Z is a processor core section 5 reserved for OS execution. Each of the cores A-N of the remaining processor cores 5 includes a plurality of processing mechanisms. The processing mechanism refers to a processing function intended for speeding up the processor; for example, it refers to a cache mechanism, a branch prediction mechanism, a superscalar mechanism, an out-of-order mechanism, an SIMD mechanism, etc. This means that the processor unit 1 is configured as a heterogeneous multicore processor, wherein each of the processor core sections 5 includes different processing mechanisms.

The core A includes function blocks having the same or higher performance as or than the processing mechanism included in the cores B-N. The core A further includes a performance monitor unit (PM unit) for collecting usage information of the hardware resources that the core A has while a task is being executed or when a task has been executed.

On the other hand, each of the cores B-N is configured to have processing performance that is less than the processing performance provided by all of the processing mechanisms provided in the core A. Each of the cores B-N is provided with processing mechanisms, each of which having improvement performance equal to or less than the respective processing mechanisms provided in the core A.

The processor unit 1 also includes the scheduler assisting section 6. When an application program including a plurality of tasks containing execution of the same task is executed, the scheduler assisting section 6 assigns each task to any of the processor core section 5 (any of the cores A-N) for executing the task. If the task is a task not previously executed, the scheduler assisting section 6 always assigns the task to the core A. If a once executed task is again executed, the scheduler assisting section 6 references the usage information of the hardware resources of the task previously collected in the performance monitor unit, selects one of the processor cores 5 (cores A-N) to process the task, and supplies the task to the selected processor core section 5 (any one of the cores A-N).

The processor unit 1 also includes a system bus I/F section 7 as an interface for connecting the internal bus and the system bus.

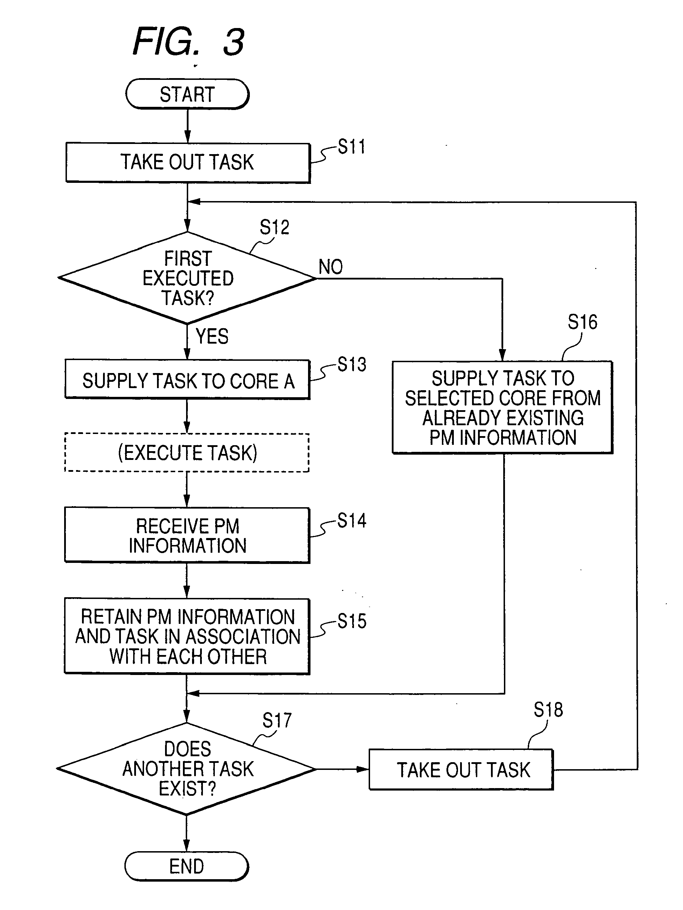

FIG. 3 shows the schematic operation of the whole of the processor unit 1 described above.

As the user inputs an execution request of an application program, the OS in the core Z supplies the tasks of the application program to the scheduler assisting section 6 in the execution order and the scheduler assisting section 6 takes out the tasks in the execution order while temporarily holding the supplied tasks (S11). The scheduler assisting section 6 determines whether or not the taken-out task is a task not previously executed (S12). If the task is a task not previously executed, the scheduler assisting section 6 supplies the task to the core A (S13). Upon completion of the execution of the task, the scheduler assisting section 6 receives the usage information (PM information) of the hardware resources of the task collected in the performance monitor unit (PM unit) (S14). The scheduler assisting section 6 retains the usage information in association with information indicating the task (S15).

On the other hand, if the task is a once executed task, the scheduler assisting section 6 references the usage information of the hardware resources of the task previously collected in the performance monitor unit (PM unit), selects one of the processor cores 5 (cores A-N) to execute the task, and supplies the task to the selected processor core section 5 (S16).

Until the supplied and temporarily retained tasks run out (S17), the scheduler assisting section 6 takes out a task (S18) and repeats step S12 and the later steps. When the tasks run out, the execution of the application program is complete.

If an execution request of a different application containing the task contained in that application being executed is received from the user, the task can use the usage information previously collected in execution of the application task.

According to the embodiment of the invention as described above, when the heterogeneous multiprocessor again executes a task, it is made possible to select the processor core section appropriate for execution of the task and cause the selected processor core section to execute the task.

Next, more detailed examples of the embodiment described above will be discussed.

### First example

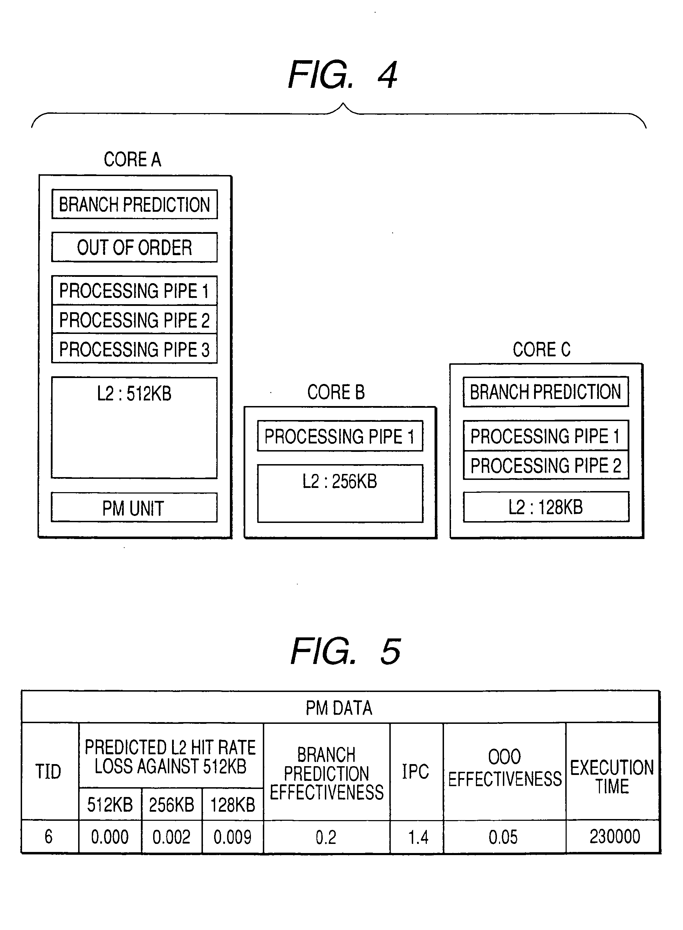

In a first example, it is assumed that the case where the number of the processor cores 5 of the processor unit 1 is four. FIG. 4 shows an example of the processing mechanisms included in the cores A to C except the core Z for executing the OS among the four processor cores 5.

The core A includes the processing mechanisms of a branch prediction mechanism (Branch prediction), an out-of-order mechanism (out-of-order), three identical pipeline mechanisms (Processing pipes 1 to 3), and a 512-KB secondary cache mechanism (L2:512KB). The core A also includes the performance monitor unit (PM unit) for monitoring the use state of the hardware resources of the core A. The core B includes one pipeline mechanism identical with that of the core A and a 256KB secondary cache mechanism of a storage area of a half capacity of that of the core A. The core C includes a branch prediction mechanism identical with that of the core A, two pipeline mechanisms identical with those of the core A, and a 128KB secondary cache mechanism of a storage area of a quarter capacity of that of the core A. Thus, each of the cores B and C is a functional subset of the processor core section A. The processor core section Z is a processor core dedicated to the OS and will not be discussed. Each of the cores A, B, and C can execute object code implemented as identical ISA (which is represented by instruction format in operation code set of binary numbers).

Next, the performance monitor unit (PM unit) included in the core A will be discussed.

The PM unit collects the use state of the hardware resources in execution of one task in the core A, generates a plurality of pieces of data by calculation, etc., and outputs them to the scheduler assisting section 6 as usage information (PM information). Although it is considered that various pieces of information are included in the PM information, in the embodiment, the PM information is made up of the items of cache performance deterioration ratio, effectiveness of branch prediction, IPC, out-of-order effectiveness, and execution time in association with task ID (TID=6), as shown in FIG. 5.

The items and a generation method thereof will be discussed below.

"Cache performance deterioration ratio": How much speed improvement is provided by the secondary cache mechanism having a cache size of 512 KB is measured and the value indicating how much the performance is adversely affected if the cache size is changed (decreased) is the cache performance deterioration ratio. The PM unit measures "number of hits" and "number of misses" for each cache entry, multiplies "number of cache miss penalty cycles" and "number of misses in hits with 512 KB" based on the number of hits and the number of misses, and divides the result by "total number of cycles required for task processing" to calculate the adverse effect on the performance for each cache size.

The "number of misses in hits with 512 KB" is obtained as follows: (1) The number of hits and the number of misses are counted for each cache entry, (2) a comparison is made between entries which become the same entries if the cache size is changed and the entry with the largest number of hits is found, and (3) the numbers of hits of all entries except the entry with the largest number of hits, of the entries which become the same entries if the cache size is changed are totalized and the total value is multiplied by "word size □ cache line size." The value thus obtained is adopted as the prediction value of the number of misses in hits if the cache size is changed and (4) last they are totalized.

"Effectiveness of branch prediction": How much speed improvement is provided by the branch prediction mechanism is measured and the value indicating the effectiveness is the effectiveness of branch prediction. Using "branch is taken" and "hit of branch prediction" of performance index events also adopted in existing PM units, "number of branch miss penalty cycles" of a constant uniquely determined by the processor is multiplied with "number of times branch is taken and branch prediction hits" and the result is divided by "total number of cycles required for task processing" indicating the processing time required essentially for the task except the delay occurring due to synchronization processing with another task to provide the effectiveness of branch prediction.

"IPC": The average value of the numbers of instructions processed per cycle is measured and the necessary number of pipelines is the IPC. The IPC is provided by dividing "number of executed instructions" of a performance index event also adopted in existing PM units by above-mentioned "total number of cycles required for task processing."

"Out-of-order effectiveness": How much instruction passing can be realized by the out-of-order mechanism is measured and the value indicating the effectiveness is the out-of-order effectiveness. It is found by dividing "number of instructions issued ahead of preceding instruction" by "number of executed instructions."

"Execution time": Measurement value of the number of cycles taken for the task execution time. Here, the execution time is in units of the number of cycles.

The "cache performance deterioration ratio," the "effectiveness of branch prediction," the "IPC," the "out-of-order effectiveness," and the "task execution time" thus found in the PM unit are supplied to the scheduler assisting section 6.

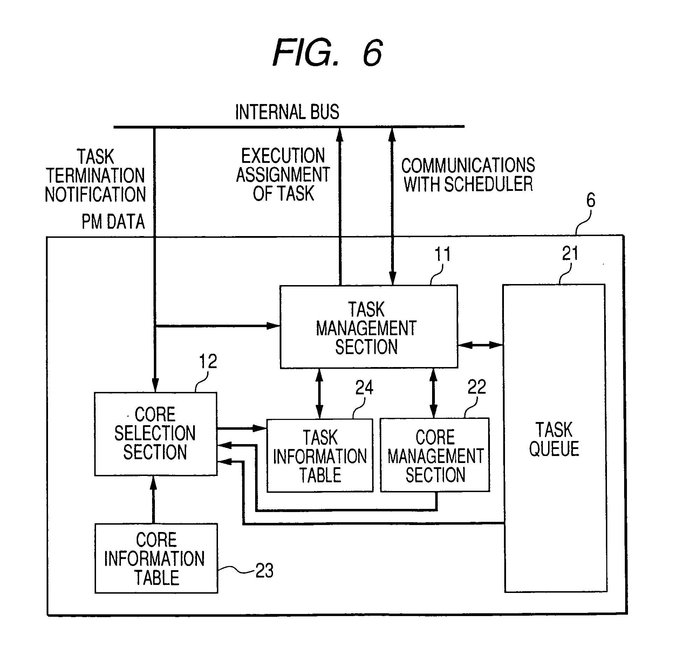

Next, the scheduler assisting section 6 will be discussed in detail. FIG. 6 illustrates the internal blocks of the scheduler assisting section 6 and their relationship.

The scheduler assisting section 6 mainly includes four tables of a task queue 21, a core management table 22, a task information table 24, and a core information table 23 implemented as register files and two execution sections of a task management section 11 and a core selection section 12 implemented as hardware circuitry.

The tables will be discussed. N/A indicated in each table is Not Assigned which means "none."

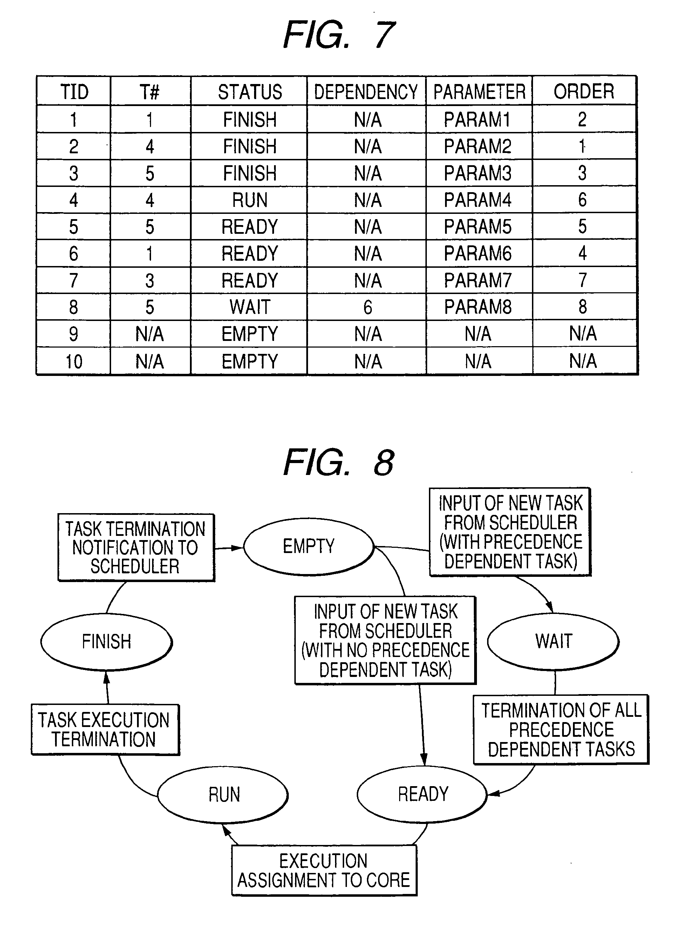

The task queue 21 manages the state of each task executed in each processor core section 5. FIG. 7 shows an example of the task queue 21 in one state. The task queue 21 is made up of a finite number of entries (in the example, 10 entries) and each entry has items of TID, T#, status, dependency, parameter, and order. TID is the unique internal ID of each task managed in the scheduler assisting section 6 at present, T# is the proper ID for each start address of the task assigned to TID, status is the state of the task indicated in TID, dependency is a TID list of the tasks whose execution must be previously terminated for enabling the task to be executed, parameter is the parameter used when the task is executed, and order is an item of holding the input order of the tasks into the task queue. In the example, T# is the proper ID for each start address of the task; in fact, however, if the operation pattern varies depending on the situation although the start address is the same, it is also possible to give different ID.

Five states of empty, wait, ready, run, and finish are provided as the task state indicated by status and a state transition is made as shown in FIG. 8, whereby task management is realized. First, when a new task is input from the scheduler, the task is registered in one of the TIDs with empty state. If a precedence dependent task is set for the input task, the state is set to wait; otherwise, the state is set to ready. The state of the task in wait state is set to ready upon completion of all preceding tasks. The task in ready state is to be assigned to any core and when execution of the task is assigned to the core, the task takes a state transition to run and further when the task execution terminates, the task takes a state transition to finish. Last, when the scheduler is notified of the task termination, the state of the task is restored to empty and again it is made possible to accept a new task.

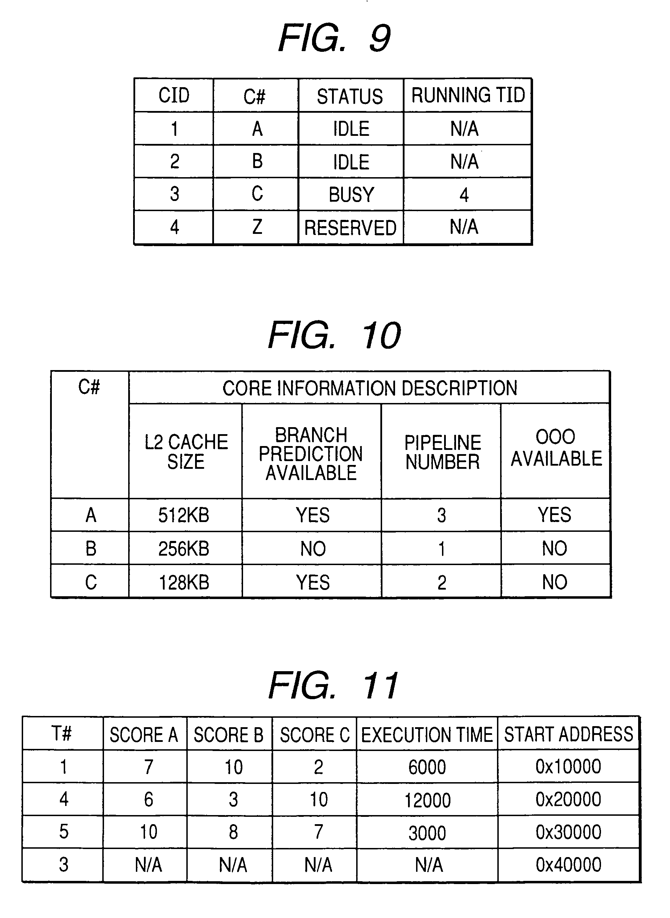

The core management table 22 is a table for storing the current state of each processor core section 5. FIG. 9 shows an example of the core management table 22 in one state. The core management table 22 has as many entries as the number of the cores included in the processor unit 1. Each entry has four items of CID, C#, status, and running TID used to indicate the unique internal ID in the processor unit 1, the core type, the core state, and the TID of the task being executed respectively. As the core state, busy, idle, and reserved exist and indicate the state in which the task is being executed, the state of wait for task execution assignment, and the state of not involved in task assignment respectively.

The core information table 23 is a table describing the features for each type of core installed in the processor unit 1 and used as a criterion of core selection. FIG. 10 shows an example of the core information table in one state. The core features are the L2 cache size (L2 cache size), the presence or absence of a branch predictor (branch prediction available), the number of instruction execution pipelines (pipeline number), and enable/disable of out-of-order execution (OOO available). If the presence or absence of a function is indicated, YES is entered if the function is included; NO if the function is not included; otherwise, the quantity of the processing mechanisms indicated in the entry is included as a parameter. The core information table 23 is a proper table for each core (A to C) and is not rewritten. The core Z, which is reserved for executing the OS, is not involved in task assignment and thus the items for the core Z are not included.

The task information table 24 indicates the degree of appropriateness when a task is executed in each processor core section 5. FIG. 11 shows an example of the task information table in one state.

The task information table 24 includes items of Score to indicate how much the task indicated in T# can be executed optimally in which type of core (Score A is suitability for the core A, Score B is suitability for the core B, and Score C is suitability for the core C and 10 is the maximum value and the larger the value, the higher the suitability indicated), an item of execution time to retain the execution time (the number of cycles) when the task was executed in the core A, and an item of start address indicating the execution start address of the task. T# of every task registered in the task queue 21 has an entry in the task information table 24. The suitability for each type of core is not yet examined for the task with N/A entered in the score item. The Score value is found by score calculation of the core selection section 12 as described later in detail.

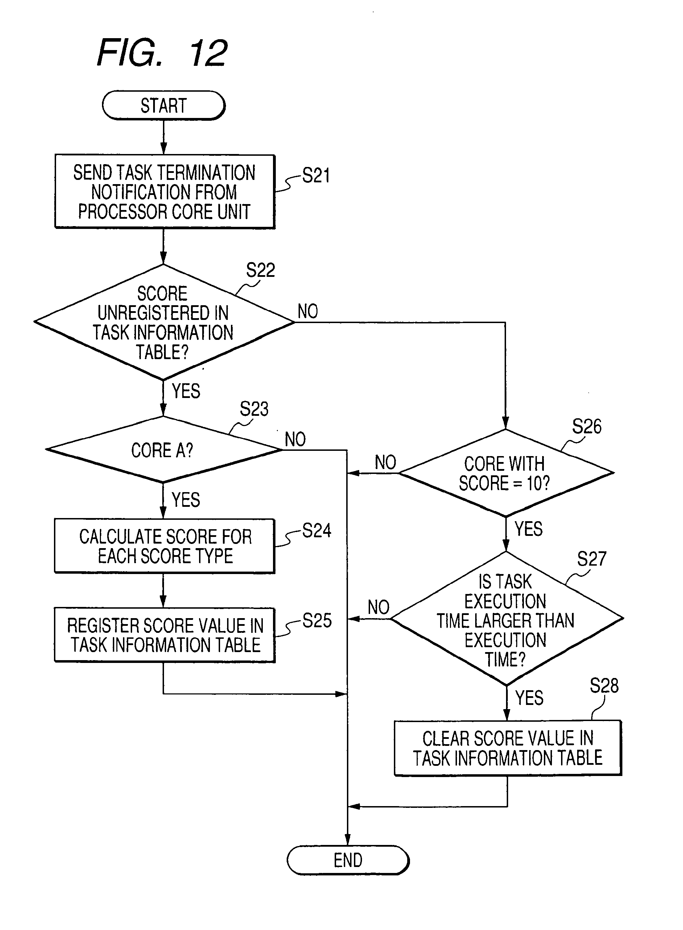

The core selection section 12 receives a task termination notification from the processor core section 5 and updates the task information table 24 while referencing the task queue 21, the core management table 22, and the core information table 23. FIG. 12 shows an update flow of the task information table and a description is given below:

When a task terminates, the processor core section 5 transmits a termination notification to the scheduler assisting section 6 via the internal bus. In the scheduler assisting section 6, the core selection section 12 receives the termination notification (S21). The termination notification contains the TID of the executed task, the CID of the processor core section 5 sending the termination notification, the time required for the task execution, and PM data if the task is executed in the core A. The core selection section 12 references the task queue 21 and the core management table 22 based on the sent TID and CID and finds out T# of the TID and C# of the processor core section 5 executing the task.

Next, the core selection section 12 references the task information table 24 about T# found at step S21 and determines whether or not the score for each core type is already calculated (S22). If the score item is N/A, it is determined that the score is not yet calculated and the process proceeds to step S23. On the other hand, if the score already involves one value, the process proceeds to step S26.

The core selection section 12 determines whether or not the task has been executed in the core A from C# found at S21 (S23). If the task has been executed in the core A, the process proceeds to step S24; otherwise, the processing is terminated.

The core selection section 12 calculates the score for each core type, of T# corresponding to the task based on PM information transmitted as a part of the termination notification (S24). The core selection section 12 records the score value for each core type calculated at S24 in the corresponding item of the task information table 24. It also records the execution time of the task in the execution time item (S25) and terminates the processing.

If the determination at step S22 is NO, the core selection section 12 checks the task information table 24 for the score value for the processor core section 5 executing the task according to T# and C# obtained at step S21. The process proceeds to step S27 only if the score is 10; otherwise, the processing is terminated. The reason why S27 is executed only if the score is 10 is that the core with score=10 is determined the optimum core for the task and a comparison is made between the execution time when the task is executed in such a core and the execution time when the task is executed in the core A, whereby the validity of the determination of the optimality can be again verified. In contrast, it is difficult to perform a comparison between the execution time when the task is executed in a core such that score<10 and the execution time when the task is executed in the core A and therefore the re-verification processing at S27 is not performed in the example.

The core selection section 12 performs a comparison between the current execution time of the task and the execution time in the core A registered in the task information table 24 (S27). To allow a measure of error, the execution time of the task may be compared with the value resulting from adding a given value to the execution time registered in the table (or the value resulting from multiplying the execution time registered in the table by a given value) (the given value can be externally set). As a result of the comparison, if the current execution time of the task does not exceed the execution time registered in the task information table 24, the processing is terminated. On the other hand, if the current execution time of the task exceeds the execution time registered in the task information table 24, the core selection section 12 sets the information concerning the task in the task information table 24 to N/A, namely, clears the information (S28). As step S28 is executed, when the same task is later again executed, re-selection of the optimum processor core section 5 is made.

An example of the calculation method of the score recorded in the task information table 24 is given below.

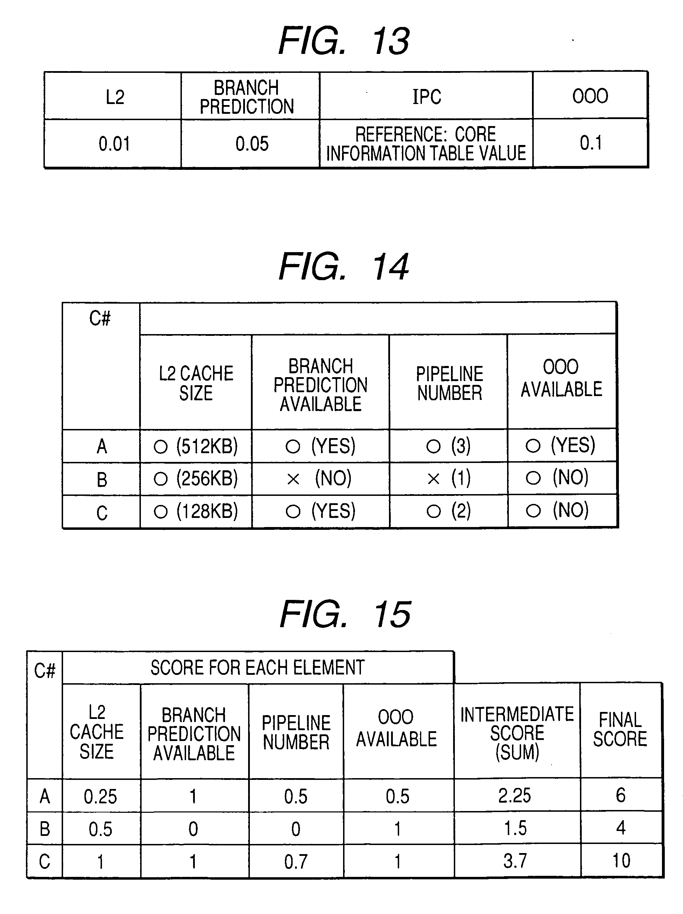

The core selection section 12 includes a threshold value table to evaluate PM information. FIG. 13 shows an example of the threshold value table. The score calculation method using the threshold value table is executed as follows:

First, the threshold value table and PM information are referenced and whether or not the hardware resources of each processor core section 5 satisfies a condition to execute the task without any delay is determined. Specifically, it is determined that if the PM data value is less than the threshold value, the condition is not satisfied (X) and that if the PM data value is equal to or greater than the threshold value, the condition is satisfied (O). The processing result becomes as shown in FIG. 14, for example.

Next, the score for each of the hardware resources of each processor core section 5 is calculated. If it is determined in the previous determination that the condition to execute the task without any delay is not satisfied (X), "0" point is given; if it is determined that the condition is satisfied (O), further score calculation responsive to the necessity is performed. The score calculation responsive to the necessity is conceptually to give "1" point if the requirement is satisfied with the necessary minimum hardware resources and to give a demerit mark and give less than "1" point if the hardware resources more than necessary are included. More specifically, for each of the hardware resources indicated by YES or NO, if the hardware resource is included although it is not required, "0.5" point is given; for each of the hardware resources indicated by the quantity, the value resulting from dividing the necessary quantity by the actually owned quantity is adopted as the score. The processing result becomes as the left four items of the six items in FIG. 15, for example.

Next, the total value of the values calculated for the hardware resources is found for each processor core. The processing result becomes as the fifth item "Intermediate score (SUM)" of the six items in FIG. 15 from the left, for example.

Next, "10" point is given to the core having the largest value and for any other processor core, the value resulting from multiplying the value found as the intermediate value by 2.5 is rounded up to the nearest integer as the final score. The processing result becomes as the sixth item "Final score" of the six items in FIG. 15 as the rightmost item, for example.

The scores to be recorded in the task information table 24 are thus found.

Referring back to FIG. 6, the description will be continued.

The task management section 11 performs communications with the core Z executing the OS and also sends notification of task execution assignment to the processor core section 5 to which the task is to be assigned and receives execution termination notification from the processor core section 5 to which the task is assigned.

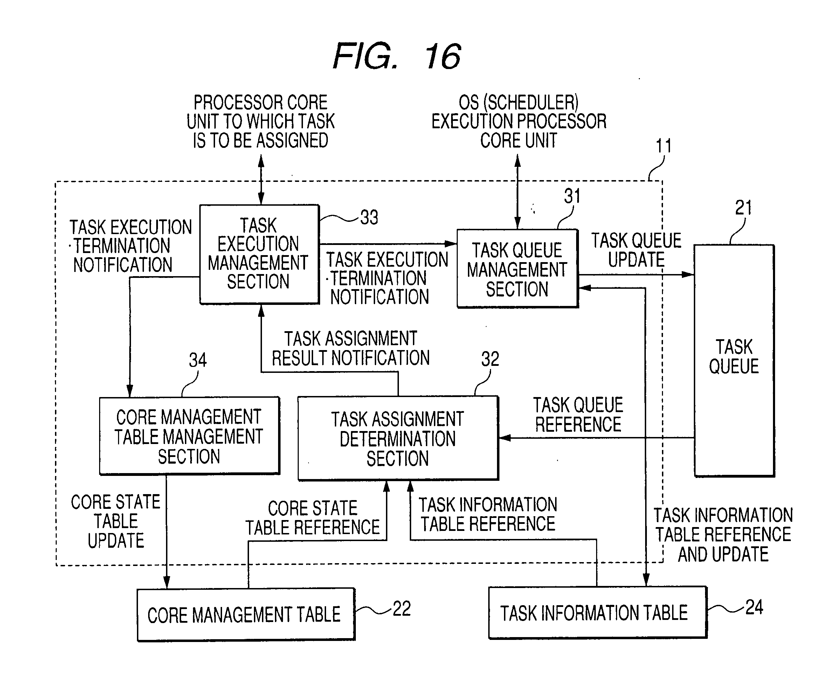

FIG. 16 shows the configuration of the task management section 11. The area enclosed by the dashed line indicates the task management section 11. The task management section 11 includes a task queue management section 31 for updating the task queue 21, a task assignment determination section 32 for determining the task to be assigned to the processor core section 5, a task execution management section 33 for managing execution of the assigned task in the processor core section 5, and a core management table management section 34 for updating the core management table 22. The task queue management section 31 and the task execution management section 33 can conduct communications with each processor core section 5 via the internal bus.

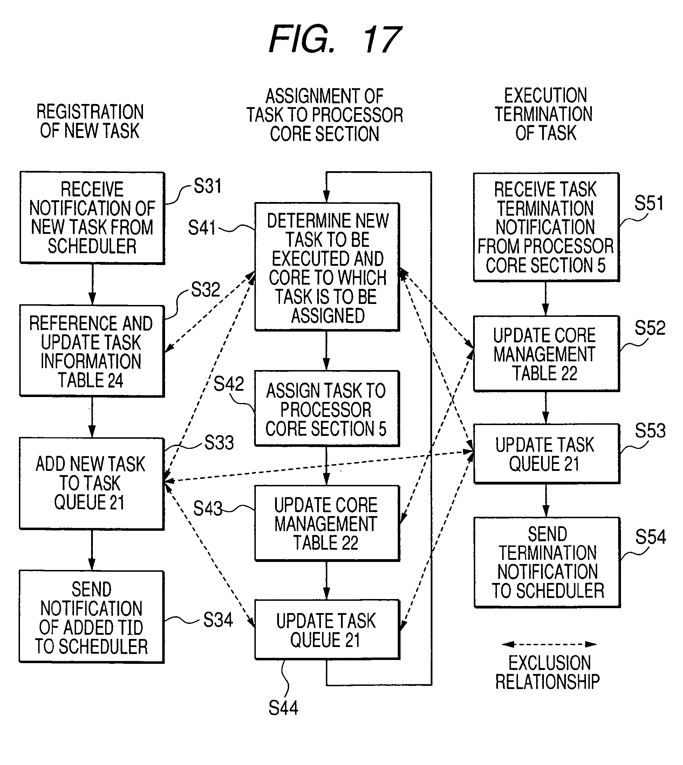

Next, the operation of the task management section 11 will be discussed based on a flowchart of FIG. 17. The operation includes three flows of "registration of new task," "assignment of task to core processor unit," and "execution termination of task," which are executed independently except access to the common tables. The exclusion relationship involved in the access to the common tables is as indicated by the dashed line arrows in the figure. Exclusive execution is applied between the processing stages connected by the dashed line arrows.

First, the registration of a new task will be discussed.

The task queue management section 31 receives an execution request of a new task from the scheduler via the internal bus (S31).

The task queue management section 31 references the task information table 24 and finds T# from the start address of the task requested by the scheduler. If the start address of the task is registered in the task information table 24, the task queue management section 31 adopts the T# as the T# of the new task; if the start address is not yet registered, the task queue management section 31 generates a new T# entry in the task information table 24 and registers the start address in the start address item as the T# of the task (S32).

The task queue management section 31 registers the new task in an empty entry in the task queue 21 (entry in empty state). The task queue management section 31 registers the corresponding item of the task queue 21 based on the T# obtained at step S32 and dependency, parameter information contained in the request sent from the scheduler (S33) and sets the value of the order item so that the task becomes behind the existing task in the order relationship. If dependency is not empty, status is set to wait; otherwise, status is set to ready.

The task queue management section 31 returns the TID registering the new task to the scheduler via the internal bus (S34).

Next, the assignment of the task to the processor core section 5 will be discussed.

The task assignment determination section 32 references the task queue 21, the task information table 24, and the core information table 23, determines the new task to be assigned and the processor core section 5 to which the task is to be assigned, and sends notification to the task execution management section 33 (S41). The provided information includes the TID indicating the task to be assigned and the execution start address and the execution parameter of the task and the CID indicating the processor core section 5 to which the task is to be assigned. The task determination processing of the task assignment determination section 32 is described later in detail.

The task execution management section 33 requests the processor core section 5 indicated by the CID to execute the task indicated by the TID via the internal bus based on the provided information. Specifically, the task execution management section 33 references the task queue 21 based on the received TID, reads the corresponding T# and parameter, and sends the information to the processor core section 5 indicated by the CID as a task execution request. The task execution management section 33 also stores a pair of CID and TID during the task execution as information (S42).

The task execution management section 33 transmits the CID and the TID together with an execution start flag to the core management table management section 34. The core management table management section 34 updates the core management table based on the information. Specifically, it sets the status item of the entry indicated by the CID to busy and registers the TID in the running TID item (S43).

The task execution management section 33 transmits the TID together with an execution start flag to the task queue management section 31. The task queue management section 31 updates the task queue based on the information. Specifically, it sets the status item of the entry indicated by the TID to run (S44).

The process returns to step S41 and another task is assigned.

Next, the execution termination of the task will be discussed.

When the processor core section 5 executing the task sends notification of the task termination to the scheduler assisting section 6 via the internal bus, the task execution management section 33 receives the information. The provided information contains the ID (CID) to identify the processor core section 5 terminating the execution of the task (S51).

The task queue management section 31 transmits the CID together with a termination flag to the core management table management section 34. The core management table management section 34 updates the core management table based on the information. Specifically, the status item of the entry indicated by the CID is set to idle and N/A is entered in the running TID item.

The task execution management section 33 transmits the TID together with a termination flag to the task queue management section 31. The task queue management section 31 updates the task queue 21 based on the information. Specifically, the status item of the entry indicated by the TID is set to finish and further the TID is deleted from other TID entry dependency items (S53).

The task execution management section 33 sends notification of the task termination to the scheduler via the internal bus. The provided information contains the TID of the task whose execution terminates. Further, after sending the task termination notification, the task execution management section 33 updates the task queue 21. Specifically, the status item of the entry indicated by the TID is set to empty and N/A is entered in the items of T#, parameter, and order. Further, all order values of the entries in the task queue 21 larger than the order value of the task are decremented by one (S54).

The task management section 11 operates as described above.

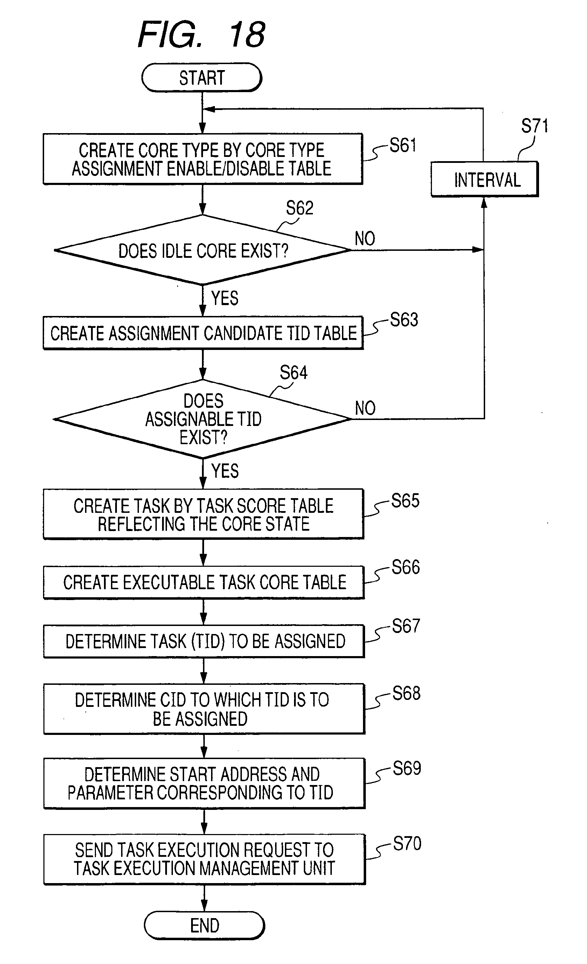

Next, the detailed operation of the task assignment determination section 32 for assigning a task will be discussed with FIG. 18. The task assignment determination section 32 has the functions of referencing the three tables of the task queue 21, the task information table 24, and the core information table 23 in the scheduler assisting section 6 and determining the task to be executed by the processor core section 5 and the processor core section 5 to which the task is to be assigned.

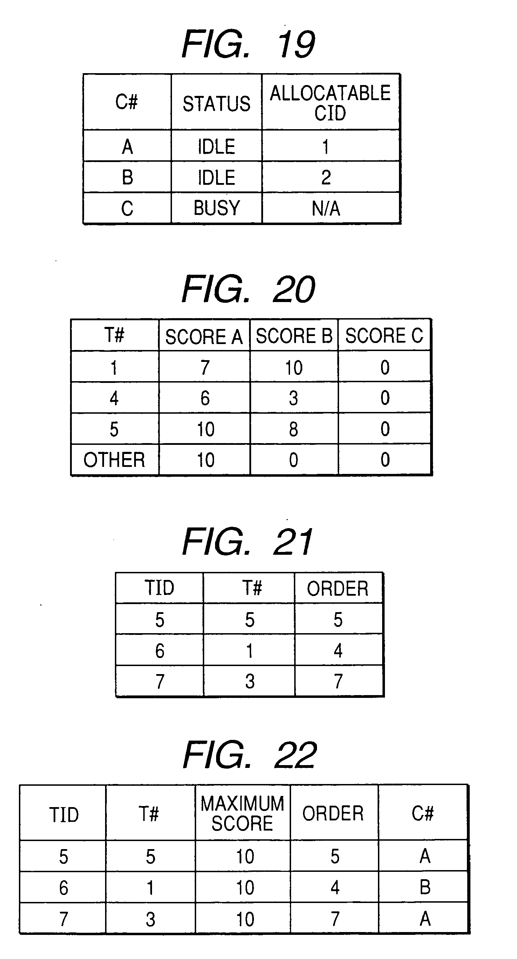

First, the task assignment determination section 32 generates a core type by core type assignment enable/disable table (S61). FIG. 19 shows an example of the core type by core type assignment enable/disable table. The core type by core type assignment enable/disable table is an intermediate table that can be generated based on the core management table 22 and is a table having entries for each core type (C#) for indicating enable/disable of new task assignment (status) and which CID can be assigned (allocatable CID) if possible. The status item is set to idle only if the status of at least one of the corresponding cores (C#) in the core management table is idle; otherwise, the status item is set to busy. In the allocatable CID item, only if the preceding item is idle, the smallest CID of the CIDs having the C# in the core management table 22 with the status idle is set.

Next, whether or not the core with the status idle exists in the core type by core type assignment enable/disable table is determined (S62). If such core exists, then an assignment candidate TID table is created (S63).

FIG. 20 shows an example of the assignment candidate TID table. The assignment candidate TID table is an intermediate table that can be generated from the task queue 21 and is a table provided by extracting only T# and order for each assignable TID. Only TID with the status ready in the task queue 21 is extracted and T# and order are drawn out, whereby the table can be generated.

Next, whether or not an assignable TID exists in the assignment candidate TID table is determined (S64) and if it exists, then a task by task score table reflecting the core state is created (S65).

FIG. 21 shows an example of the task by task score table reflecting the core state. The task by task score table reflecting the core state is an intermediate table that can be generated based on the core type by core type assignment enable/disable table and the task information table and is a mask table of the score value for the core type of core that cannot be assigned at present as 0. Based on the task information table 24, if the core type can be assigned from the core type by core type assignment enable/disable information, the score value remains unchanged; if the core type cannot be assigned, the score is rewritten as 0, whereby the task by task score table reflecting the core state is generated. An entry of "other" is added so as to handle all tasks with no score registered in the task information table 24, so that only the core A is set to score 10 and others are set to score 0 and then similar mask processing to that described above is performed for setting the score for each core type.

Next, an executable task core table is generated (S66). FIG. 22 shows an example of the executable task core table. The executable task core table is an intermediate table that can be generated from the previously generated task by task score-table reflecting the core state and the assignment candidate TID table and is a table having entries for each assignable task as items of TID, T#, maximum score, order, and C#. The C# and the maximum score are values calculated from the task by task score table reflecting the core state based on the corresponding T# and indicate the core type (C#) to take the maximum score and the score value when the task is assigned to the core. As the T# and the order, the values of the corresponding TID are registered intact from the assignment candidate TID table.

When the four intermediate tables have been generated, the task assignment determination section 32 determines the task to be assigned (S67). Specifically, it is determined that it is most appropriate to assign the task indicated by the TID with the maximum score value being the maximum to the processor core section 5 of the core type indicated by the corresponding C#. If more than one task having the same maximum score value exists, the TID with the minimum order value is selected.

Next, the task assignment determination section 32 selects the processor core section 5 to execute the selected TID by referencing the CID item of the corresponding entry of the core type by core type assignment enable/disable table using the C# indicated in the executable task core table (S68).

Further, the task assignment determination section 32 references the task information table 24 based on the T# indicated in the executable task core table and determines the execution start address of the task and references the task queue based on the TID and determines the execution parameter of the task (S69). The task assignment determination section 32 sends the information (TID, CID, execution start address, and parameter) to the task execution management section 33 (S70). In the example, it is determined that the task indicated by TID=6 (start address = 0x10000, execution parameter = parameter 6) is assigned to the processor core section 5 indicated by CID = 2.

If the idle core does not exist at step S62 or if the assignable TID does not exist at step S64, interval processing is performed (S71) and then the processing starting at step S61 is again started. Updating the table in the scheduler aid unit accompanying input of a new task, the termination of a task, etc., is allowed during the interval processing.

As described above, according to the first example, while execution of the not previously executed task in the shortest processing time by the core A is realized, the PM unit measures the execution characteristic of the task at the same time and the suitability for the different types of cores is scored at the execution termination time, whereby it is made possible to select the core capable of executing at similar processing speed to that of the core A if less resources are included when the task is next executed. If such a core is executing another task and is not available, it is made possible to select the most appropriate core among the available cores from the value of the score. Further, if the score determination is not appropriate, it is also made possible to perform a comparison between the execution time in the core A and that in another core for detecting it and again make score determination by again executing in the core A.

### Second example

In the first example, in the processor unit 1 including the three types of processor cores 5 of the cores A, B, and C, the core A includes the functions of all other cores. A second example is an example also applicable to a processor unit 1 wherein such absolute core A does not exist. The second example overlaps the first example in many points and therefore will be discussed centering on the differences therebetween.

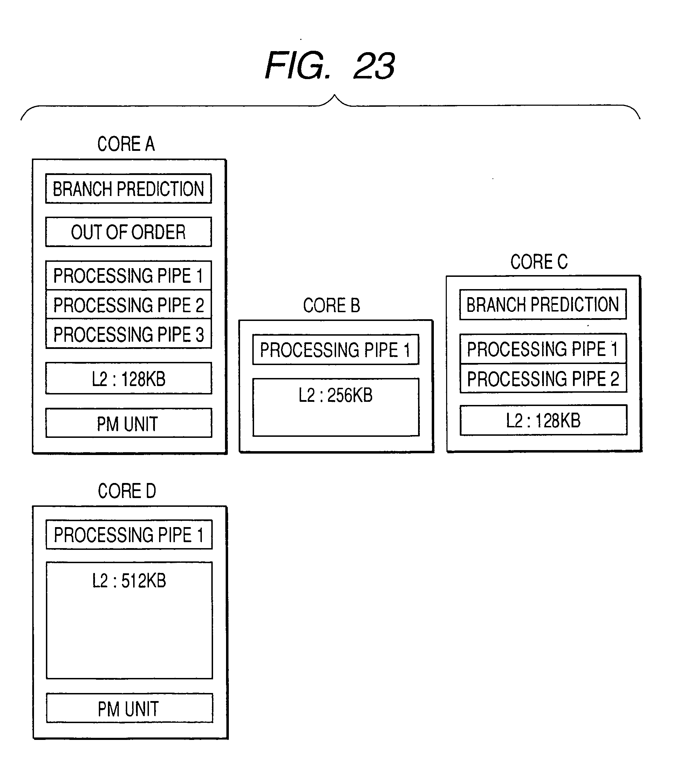

In the second example, the processor unit 1 has five processor cores 5. FIG. 23 shows an example of the processing mechanisms included in cores A to D except a core Z for executing the OS among the five processor cores 5.

As seen in the figure, each of the cores B, C, and D is a subset of the core A from the viewpoint of the number of instruction pipelines, a branch predictor, and an out-of-order mechanism, and each of the cores A, B, and C is a subset of the core D from the viewpoint of the L2 cache size.

Therefore, a performance monitor unit (PM) is installed in the core D as well as the core A.

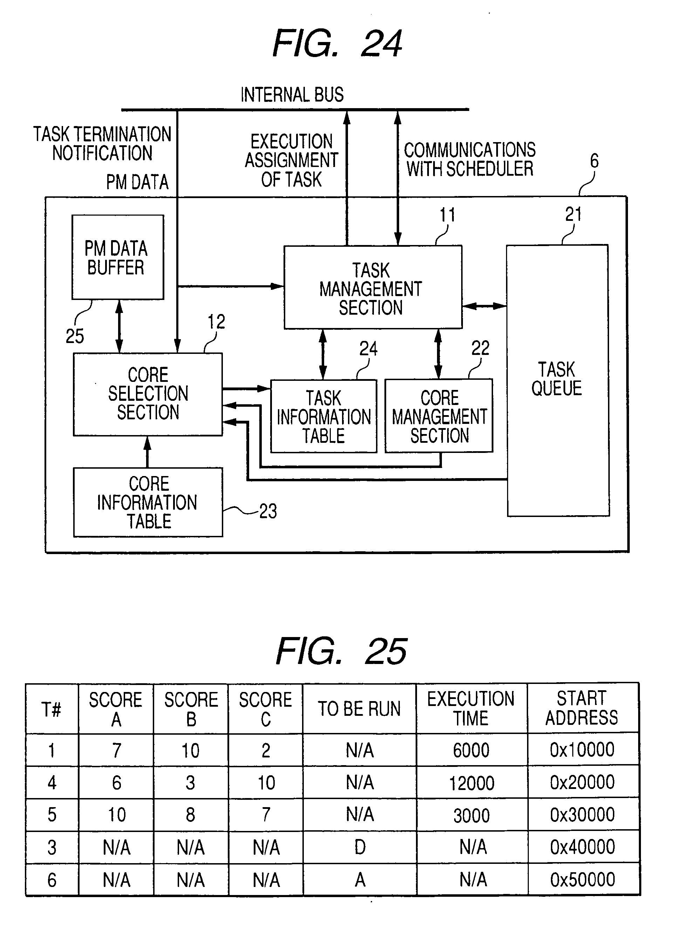

Next, a scheduler assisting section 6' will be discussed with FIG. 24. As seen in the figure, the scheduler assisting section 6' differs from the scheduler assisting section 6 in the first example in that a PM data buffer 25 is added. Although not directly seen in the figure, it also becomes necessary to partially change (expand) the task information table 24, the task management section 11, and the core selection section 12 in the first example as a task information table 24', a task management section 11', and a core selection section 12'.

The PM data buffer 25 temporarily stores one task (T#) until PM information from both the cores A and D are complete because the PM information is sent at different timings from the two cores A and D. When the PM information from both the cores A and D are complete, the core selection section 12' calculates the score for each core type of the task (T#) and upon completion of calculating the score, the entry for the task (T#) in the PM data buffer is deleted.

A "To be run" item is added to the task information table 24' as shown in FIG. 25, wherein a list of the types (C#) of processor cores 5 which must be executed to calculate the score of the task is registered. The C# value registered here is removed from the list each time the corresponding task terminates in the processor core section 5 indicated by the C# value and when N/A is entered in the item, it indicates that the score has been calculated. In the example, it is seen that the task with T#=3 is already executed only in the core A, that the task with T#=6 is already executed only in the core D, and that other tasks 1, 4, and 5 are already executed in both the cores A and D.

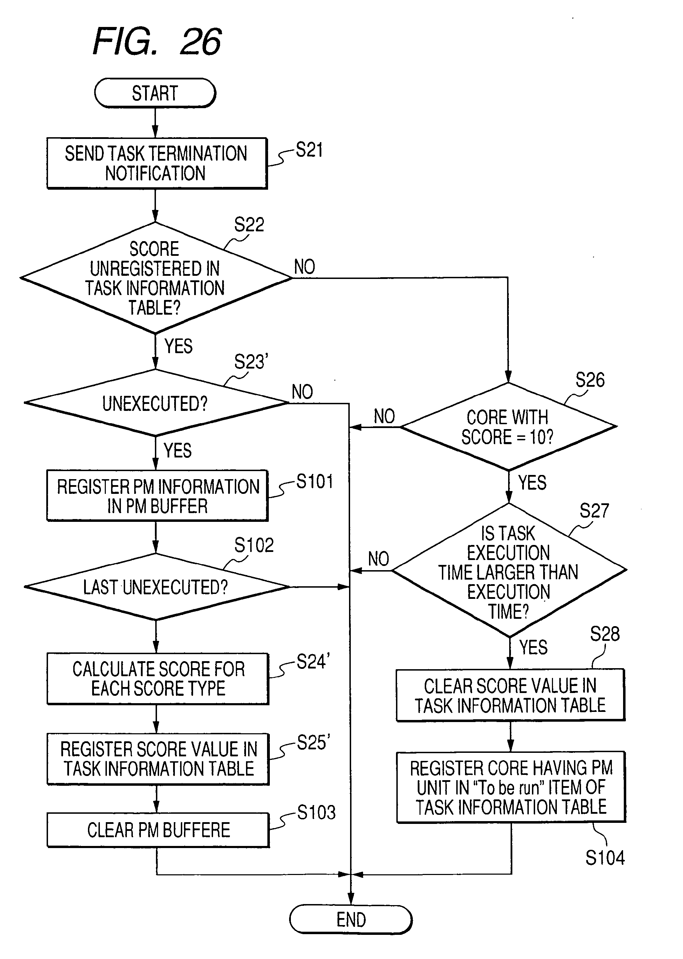

The core selection section 12' operates according to a flow as shown in FIG. 26. The same steps as those in the operation flow of the core selection section 12 in the first example (FIG. 12) are denoted by the same step numbers and a single quotation mark (') is added to changed steps and newly added steps are denoted by step numbers in the 100 range.

First, steps S21 and S22 are the same as those of the first example.

When YES is returned from step S22, then the core selection section 12' determines whether or not the task has been executed in the cores A and D from C# and T# found at S21 (S23'). Specifically, if C# is listed in the "To be run" item in the entry indicated by T# in the task information table 24', it is determined that the task has been executed in the cores A and D. If it is determined at step S23' that the task has been executed in neither of the cores A and D, the operation flow is terminated; if it is determined that the task has been executed in the cores A and D, the process goes to step S101.

The core selection section 12' registers PM information transmitted as a part of termination notification in the PM data buffer 25 (S101). If the corresponding T# entry already exists in the PM data buffer, the PM information is added to the entry; otherwise, a new entry is added and the PM data is recorded in the corresponding item and each item wherein PM data does not exist remains N/A. To register the execution time column, if an already existing value is entered, overwrite is executed only if the value indicated by the PM data is smaller than that value. Further, the core selection section 12' removes C# registered in the corresponding "To be run" item of the task information table 24'.

The core selection section 12' determines whether or not any core type listed in the "To be run" item in the entry indicated by T# in the task information table 24' referenced at step 23' other than C# exists (S102). If any core type other than C# is not listed, the process goes to step S24'; otherwise, the processing is terminated.

Next, the core selection section 12' calculates the score for each core type, of the T# to which the task corresponds based on the PM data recorded in the PM data buffer 25 (S24').

The core selection section 12' records the calculated score value for each core type in the corresponding item of the task information table 24'. It also records the execution time recorded in the PM data buffer 25 in the execution time item of the task information table 24' (S25').

Next, the core selection section 12' deletes the corresponding entry in the PM data buffer 25 (S103) and terminates the processing.

On the other hand, if NO is returned from step S22, the process goes to step S26 and similar processing to that in the first example is performed up to step S28. After step S28, the core selection section 12' again registers the core types of processor cores 5 each having the PM unit in the "To be run" item in the entry corresponding to T# in the task information table 24' (S104). Accordingly, the task is measured again.

Next, the task management section 11' will be discussed.

The task management section 11' has a hardware configuration similar to that of the task management section 11 in the first example, but they differ in step S32 of the processing flow shown in FIG. 17 and step S65 of the task assignment determination flow shown in FIG. 18.

Step S32 is changed as follows:

The task management section 11' references the task information table 24' and finds T# from the start address of the task requested by an (OS) scheduler. If the task start address is already registered, the task management section 11' adopts the T# as the T# of new task; if the task start address is not yet registered, the task management section 11' generates a new T# entry in the task information table 24' and registers the start address in the start address item as the T# of the task. The task management section 11' registers the C# of the core types corresponding to the cores A and D (in the example, A and D) in the "To be run" item of the entry indicated by the T#.

Step 65 is changed as follows:

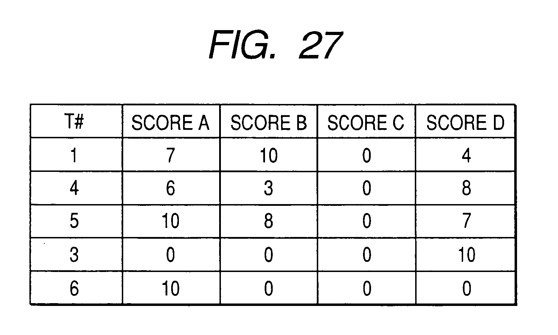

A task by task score table reflecting the core state is a table that can be generated based on a core type by core type assignment enable/disable table and the task information table 24' and is a mask table of the score value for the core type of core that cannot be assigned at present as 0. Based on the task information table 24' , if the core type can be assigned from the core type by core type assignment enable/disable information, the score value remains unchanged; if the core type cannot be assigned, the score is rewritten as 0, whereby the task by task score table reflecting the core state is generated. As for the task with no score registered in the task information table 24', while the task information table 24' is referenced, only the big core not yet executed (listed in the "To be run" item) is set to score 10 and others are set to score 0 and then similar mask processing to that described above is performed for setting the score for each core type. As a result of such change, entry of other is eliminated from the task by task score table reflecting the core state and instead, entries for all T# contained in the task information table are provided as shown in FIG. 27.

According to the second example described above, it is also made possible to apply invention to the processor unit 1 wherein the absolute core A does not exist. It is also made possible to make score determination for the tasks and all cores in the processor unit by execution the minimum number of times in the processor unit wherein the absolute core A does not exist.

In the description of the examples, the PM unit transmits the PM information together with task termination notification, but the PM unit may transmit PM information together with TID at one timing even in a situation in which the task does not terminates, and it is also possible to independently execute only the score calculation processing at step S24, S24' and the update processing of the task information table 24, 24' at step S25, S25'. In this case, however, the execution time item of the execution time of the task is not updated or is updated to the maximum value that can be registered.

In the description of the examples, although the PM unit collects the execution state concerning the task from the execution start to termination of the task, a function of transmitting the PM information being collected together with TID before the task execution termination to the scheduler assisting section 6, 6' becomes necessary. In this case, as a transmission trigger, it is possible to execute transmission processing at given time intervals using a timer, transmission processing if one data of the PM information exceeds a setup threshold value, or the like. Further, a method for the scheduler assisting section 6, 6' to actively request the PM unit to transmit the PM information being collected or the like may be applied.

In the description of the examples, each of the processor cores 5 can execute object code implemented as identical ISA (representation of instruction format in operation code set of binary numbers), but the invention can also be applied if each of the processor cores 5 can execute only a part or object code implemented as different types of ISA. In this case, for example, object code corresponding to the task that can be executed in each ISA may be provided and when the processor core section 5 to which the task is assigned is determined, the address at which the object code corresponding to the type of processor core section 5 is stored may be sent to the processor core section 5, which may then obtain the object code from the address. As another method, a method of dynamically executing binary translation, thereby generating object code that can be executed in the core to which the task is assigned, or the like can also be adopted.

In the description of the examples, each of the processor cores 5 can execute object code implemented as identical ISA, but each of the cores B and C may be able to execute only a part of object code implemented as ISA of the core A.

In this case, the executable object code is limited and therefore task assignment to the core B, C is also limited, of course.

In the description of the examples, the scheduler assisting section 6, 6' is implemented as hardware, but some or all of the functional blocks may be implemented as software. In this case, when only some of the functional blocks may be implemented as software, it becomes necessary to enable the tables indicated in the examples to be read and written from the processor core unit executing the software.

It is made possible for the OS or application software to directly read and write the task information table 24, 24' in the examples described above, whereby, for example, a function of saving the task information table 24, 24' on the disk unit 3 before power of the processor unit 1 is turned off and then registering the saved task information table 24, 24' in the task information table 24, 24' in the scheduler assisting section 6, 6' when the power of the processor unit 1 is turned on can also be implemented. Further, each application software is provided with a provided task information table 24, 24' and before execution, the task information table 24, 24' is registered in the task information table 24, 24' in the scheduler assisting section 6, 6', so that it is also possible to realize efficient processing without measuring the task characteristic from initial execution of the application software.

The foregoing description of the embodiments has been presented for purposes of illustration and description. It is not intended to be exhaustive or to limit the invention to the precise form disclosed, and modifications and variations are possible in light of the above teachings or may be acquired from practice of the invention. The embodiment is chosen and described in order to explain the principles of the invention and its practical application program to enable one skilled in the art to utilize the invention in various embodiments and with various modifications as are suited to the particular use contemplated. It is intended that the scope of the invention be defined by the claims appended hereto, and their equivalents.

## Claims

1. A multiprocessor system comprising:
a multiprocessor core that includes:
a first processor core that is provided with: a first processing mechanism for improving processing performance of data processing in the first processor core; and a performance monitor for collecting usage information of hardware resources being used or used in the data processing; and
a second processor core that is provided with a second processing mechanism adopting the same processing system as the first processing mechanism and being inferior in improvement performance to the first processing mechanism; and
a scheduler that, when executing application software including a plurality of tasks including tasks that are identical with one another, operates to:
determine whether or not a task to be executed is previously executed;
supply the task to the first processor core, when determined that the task is not previously executed;
select, when determined that the task is previously executed, one from among the processor cores by referring to the usage information collected when the task is previously executed; and
supply the task to the selected processor core.

2. The multiprocessor system according to claim 1, wherein the second processor core is configured to be capable of executing an instruction set that is executable by the first processor core.

3. The multiprocessor system according to claim 2, wherein the second processor core is configured to be capable of executing at least a part of the instruction set that is executable by the first processor core.

4. The multiprocessor system according to claim 1, wherein the first processor core is configured to be capable of executing a first instruction set, and
wherein the second processor core is configured to be capable of executing a second instruction set that is different from the first instruction set.

5. The multiprocessor system according to claim 1, wherein the scheduler is configured to be capable of outputting the usage information input from the performance monitor to an external device and to be capable of receiving the usage information from the external device.

6. A multiprocessor system comprising:
a multiprocessor core that includes:
a first processor core that is provided with: a plurality of first processing mechanisms for improving processing performance of data processing in the first processor core, the first processing mechanisms being different from one another; and a performance monitor for collecting usage information of hardware resources being used or used in the data processing; and
a second processor core that is configured to have processing performance that is less than the processing performance provided by all of the processing mechanisms provided in the first processor core, the second processor being provided with at least one of second processing mechanisms, each of which having improvement performance equal to or less than the respective first processing mechanisms provided in the first processor core; and
a scheduler that, when executing application software including a plurality of tasks including tasks that are identical with one another, operates to:
determine whether or not a task to be executed is previously executed;
supply the task to the first processor core, when determined that the task is not previously executed;
select, when determined that the task is previously executed, one from among the processor cores by referring to the usage information collected when the task is previously executed; and
supply the task to the selected processor core.

7. The multiprocessor system according to claim 6, wherein the multiprocessor core further includes a third processor core that is configured to have processing performance that is less than the processing performance provided by all of the processing mechanisms provided in the first processor core, the third processor being provided with at least one of third processing mechanisms, each of which having improvement performance equal to or less than the respective processing mechanisms provided in the first processor core.

8. The multiprocessor system according to claim 6, wherein the second processor core is configured to be capable of executing an instruction set that is executable by the first processor core.

9. The multiprocessor system according to claim 8, wherein the second processor core is configured to be capable of executing at least a part of the instruction set that is executable by the first processor core.

10. The multiprocessor system according to claim 6, wherein the first processor core is configured to be capable of executing a first instruction set, and
wherein the second processor core is configured to be capable of executing a second instruction set that is different from the first instruction set.

11. The multiprocessor system according to claim 6, wherein the scheduler is configured to be capable of outputting the usage information input from the performance monitor to an external device and to be capable of receiving the usage information from the external device.

12. A multiprocessor system comprising:
a multiprocessor core that includes:
a first processor core that is provided with: first and second processing mechanisms for improving processing performance of data processing, the first and second processing mechanisms being different from one another; and a first performance monitor for collecting usage information of hardware resources being used or used in the data processing;
a second processor core that is provided with: third and fourth processing mechanisms for improving processing performance of data processing, the third and fourth processing mechanisms being different from one another and from the first and second processing mechanisms; and a second performance monitor for collecting usage information of hardware resources being used or used in the data processing; and
a third processor core that is provided with the first and the third processing mechanisms; and
a scheduler that, when executing application software including a plurality of tasks including tasks that are identical with one another, operates to:
determine whether or not a task to be executed is previously executed;
supply the task to one of the first processor core and the second processor core, when determined that the task is not previously executed;
select, when determined that the task is previously executed, one from among the processor cores by referring to the usage information collected when the task is previously executed; and
supply the task to the selected processor core.

13. The multiprocessor system according to claim 12, wherein the second and the third processor cores are configured to be capable of executing an instruction set that is executable by the first processor core.

14. The multiprocessor system according to claim 13, wherein the second and the third processor cores are configured to be capable of executing at least a part of the instruction set that is executable by the first processor core.

15. The multiprocessor system according to claim 12, wherein the first processor core is configured to be capable of executing a first instruction set, and
wherein the second processor core is configured to be capable of executing a second instruction set that is different from the first instruction set.

16. The multiprocessor system according to claim 12, wherein the scheduler is configured to be capable of outputting the usage information input from the performance monitor to an external device and to be capable of receiving the usage information from the external device.
